# EUROPEAN PATENT SPECIFICATION

(11) **EP 4 236 010 B1**
(45) Date of publication and mention of the grant of the patent: **13.11.2024**
(21) Application number: 22159266.0
(22) Date of filing: 28.02.2022
(51) Int. Cl.: H02J 7/00, A62C 3/16

(54) **LOCKER CABINET FOR STORING AND CHARGING RECHARGEABLE BATTERIES**
SCHLIESSFACHSCHRANK ZUM AUFBEWAHREN UND LADEN VON WIEDERAUFLADBAREN BATTERIEN
ARMOIRE DE VESTIAIRE POUR LE STOCKAGE ET LE CHARGEMENT DE BATTERIES RECHARGEABLES

(43) Date of publication of application: 30.08.2023
(73) Proprietor: Mobile Locker NV, 2160 Wommelgem (BE)
(72) Inventor: Mortelmans, Koen, B-2240 Wommelgem (BE); Van Hyfte, Jef, B-2930 Brasschaat (BE); Van Hoofstadt, Thomas, B-2018 Antwerpen (BE)
(74) Representative: IPLodge bv

(56) References cited:
- CN-A- 107 681 741
- CN-A- 108 649 666
- CN-A- 113 922 468
- US-A1- 2020 147 427

## Description

### Field of the disclosure

The present disclosure relates to a locker cabinet for storing and charging rechargeable batteries.

### Background

Locker cabinets for storing and charging rechargeable batteries are disclosed in for example US10283984B2. Such a locker cabinet typically comprises a plurality of compartments wherein each of the compartments is delimited by a first side wall, a second side wall opposite the first side wall, a bottom wall, a top wall opposite the bottom wall, an open front side and a back side opposite the open front side. Generally, each of the compartments comprises an power outlet for supplying power for charging a rechargeable battery when the rechargeable battery is stored in the compartment and a door is provided for securely closing off the open front side of the compartment.

The locker cabinet disclosed in US10283984B2 is a locker cabinet for charging devices such as for example tablet computers, laptops and mobile phones and such a locker cabinet is typical located inside a building, for example in a hotel, an airport or any other public location.

The known locker cabinets are however not suited for charging high capacity batteries such as Li-ion or Li-polymer batteries used for example for micro-mobility electrical devices such as E-bikes, E-steps or Hooverboards. It is known that these type of batteries can become unstable and initiate a fire. Generally when a fire occurs, fire suppression can be become very difficult due to for instance the occurrence of chemical reactions producing oxygen. When a fire in a battery initiates, temperatures can raise within seconds up to hundreds of degrees Celsius. Fire extinction is generally only possible by emerging the batteries in a bath of water for a long period of time.

In view of the danger involved when charging high-capacity batteries, some countries have forbidden to charge batteries of micro-mobility devices inside buildings such as for example hotels.

On the other hand, in view of the increasing number of micro-mobility electrical devices on the market, there is a need to provide for a safe and secure solution for charging batteries of these electrical devices.

United States patent application publication no. US 2020/147427 discloses a system for storing a hazardous product including a housing unit having an interior volume and a door coupled to the housing unit configured to provide access to the interior volume. The system includes an electrical connection configured to transmit electricity into or out of the interior volume. The system further includes a ventilation system for directing gasses and heat produced during a thermal event out of the interior volume.

### Summary

It is an object of the present disclosure to provide for a safe, secure and cost-effective solution for charging batteries of for instance micro-mobility electrical devices. More precisely it is an object to provide a locker cabinet for outdoor charging and storing rechargeable batteries wherein the risk for fatal accidents involving raging fires or explosions is strongly reduced when compared to actual battery charging solutions.

The present invention is defined in the appended independent claim. The dependent claims define advantageous embodiments.

According to the present disclosure, a locker cabinet for storing and charging rechargeable batteries is provided. The locker cabinet comprises a plurality of compartments stacked on top of each other starting from a bottom compartment up to a top compartment, and wherein each of the compartments is delimited by a first side wall, a second side wall opposite the first side wall, a bottom wall, a top wall opposite the bottom wall, an open front side and a back side opposite the open front side. Each of the plurality of compartments comprises a power outlet for supplying power for charging a rechargeable battery when stored in the compartment, and a door for closing off the open front side of the compartment.

The locker cabinet according to the present disclosure further comprises: an aerosol distribution chamber, a first aerosol generator located within the aerosol distribution chamber and configured such that when activated an aerosol is released into the aerosol distribution chamber, at least one smoke detector located within one of the plurality of compartments or located within the aerosol distribution chamber, an aerosol controller configured for activating the first aerosol generator if a smoke alarm is triggered by the at least one smoke detector, and a common chimney configured for evacuating gases from each of the plurality of compartments. Each of the plurality of compartments comprises a gas evacuation opening fluidly connected with the common chimney such that smoke or any other gas when present in any of the plurality of compartments can evacuate through the common chimney. Further, the back side of at least the bottom compartment comprises an opening fluidly connected with the aerosol distribution chamber such that when the first aerosol generator is activated the released aerosol flows from the aerosol distribution chamber into the bottom compartment through the opening of the back side of the bottom compartment.

Advantageously, with the locker cabinet according to the present disclosure when a fire occurs in any of the batteries stored in the locker cabinet, smoke and other gases generated inside a compartment can effectively be evacuated through the common chimney and fire can be suppressed with the aerosol being distributed to the compartments. This has a fire retardant effect and gives a fire brigade the time to come to the scene and to remove the batteries from the locker cabinet and transport them to a safe location and guarantee a complete fire extinction of the battery. The inventors have performed experiments with Li-ion and Li-polymer batteries and a locker cabinet according to the present disclosure. With these experiments it was demonstrated that a fire retardation of respectively 60 minutes and 30 minutes is obtained for high-capacity Li-ion and Li-polymer batteries, which gives sufficient time to alarm and have the fire brigade present on the scene.

Advantageously, as at least the back side of the bottom compartment comprises an opening in fluid connection with the aerosol distribution chamber, an aerosol entering the bottom compartment will push any smoke present upwards through the chimney and in addition, the aerosol will further be distributed through the chimney and the evacuation openings in the compartments such that eventually all the compartments are sprayed with aerosol. Experiments with a locker cabinet according to the present disclosure have demonstrated that all the compartments are sprayed with aerosol within 2 to 5 seconds after a fire alarm was triggered.

Advantageously as all compartments are fluidly connected with each other through the common chimney, it is not necessary to install a smoke detector in each of the compartments. The number of smoke detectors to be installed depends on the number of stacked compartments.

In embodiments, each of the compartments comprises a smoke detector. This increases the security of the locker cabinet, e.g. in case of failure of one of the smoke detectors.

In embodiments, an exit of the common chimney comprises a pressure relief valve configured for opening or closing the exit of the common chimney.

Advantageously, when the aerosol generator is activated following a smoke alarm, the aerosol is distributed in the locker cabinet and pressure is building up in the locker cabinet and the aerosol is pushing the smoke out of the locker cabinet through the chimney. Thereafter, when pressure is reduced again, the pressure relief valve is closing off the exit of the chimney such that no fresh air can enter the locker cabinet through the common chimney. In this way, a risk of a further outbreak of the fire is reduced.

The plurality of compartments of the locker cabinet according to the present disclosure are stacked on top of each other, i.e. they are stacked along an axis, e.g. a vertical axis.

The present disclosure is not limited to the number of stacked compartments, the number of stacked compartments is at least equal or larger than two, preferably equal or larger than three, more preferably equal or larger than four. The larger the number of compartments the more rechargeable batteries that can be stored and charged within a single locker cabinet.

In embodiments, in addition to the bottom compartment, other compartments of the plurality of compartments comprise a backside having an opening fluidly connected with the aerosol distribution chamber.

In embodiments, the back side of each of the plurality of compartments comprises an opening fluidly connected with the aerosol distribution chamber. Advantageously, this facilitates a fast and efficient distribution of the aerosol to all of the compartments.

In embodiments, the first aerosol generator comprises an aerosol outlet and the first aerosol generator is oriented such that when activated a flow of aerosol is released through the aerosol outlet in a direction towards, or at least partly towards, the backside of the bottom compartment. Advantageously, this facilitates an efficient aerosol distribution towards the backside of at least the bottom compartment.

In embodiments, the locker cabinet comprises a main controller coupled with the aerosol controller, and wherein the main controller is configured for sending out an alarm message to a fire department following a triggering of a smoke alarm with the at least one smoke detector. Advantageously, no time is lost for informing the fire department when a fire occurs in a battery stored in the locker cabinet.

### Short description of the drawings

These and further aspects of the present disclosure will be explained in greater detail by way of example and with reference to the accompanying drawings in which:
Fig.1a to Fig.1i schematically illustrate various examples of cross-sectional side views of embodiments of locker cabinets according to the present disclosure,
Fig.2 schematically illustrates a front view of an embodiment of a locker cabinet according to the present disclosure
Fig.3a and Fig.3b schematically illustrate a front cross-sectional view and a side cross-sectional view of a locker cabinet according to the present disclosure comprising nine compartments c1 to c9,
Fig.4 schematically illustrates the control system of an embodiment of a locker cabinet according to present disclosure and the use of a second aerosol generator,
Fig.5a and Fg.5b schematically show respectively a cross-sectional front and side view of a locker cabinet according to the present disclosure illustrating interconnected locks of the compartments.

The drawings of the figures are neither drawn to scale nor proportioned. Generally, identical components are denoted by the same reference numerals in the figures.

### Detailed description of embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

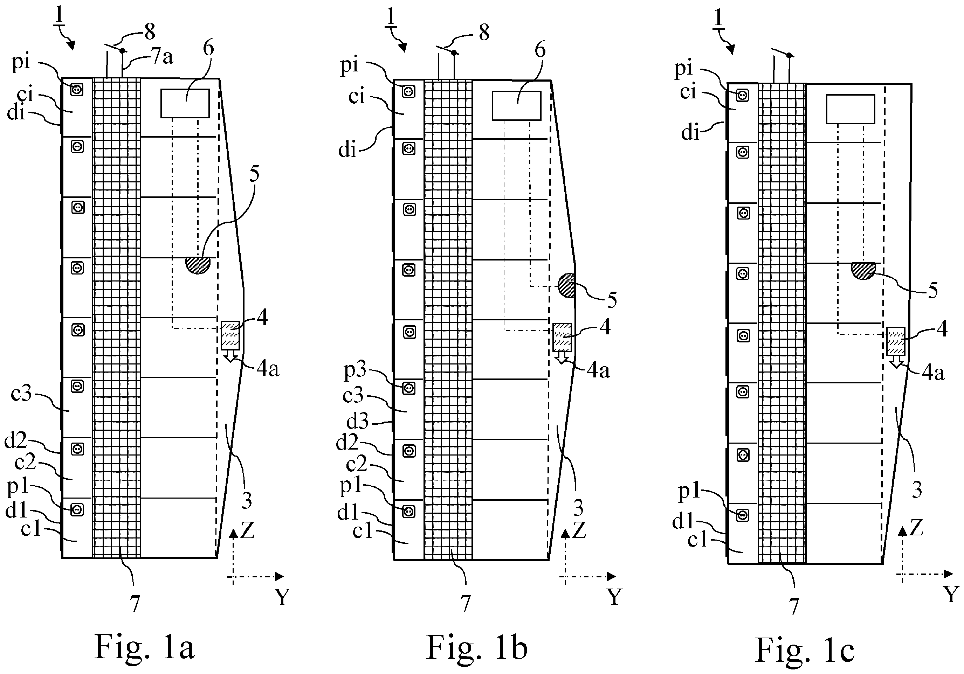

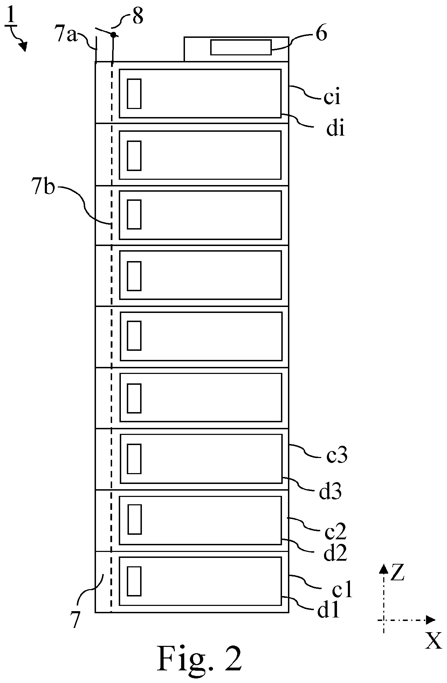

With reference to Fig.1a to Fig.3b, various views of examples of embodiments of locker cabinets 1 according to the present disclosure are shown. The locker cabinet 1 comprises a plurality of compartments c1,c2,c3,ci stacked on top of each other starting from a bottom compartment c1 up to a top compartment. Each of the compartments of a locker cabinet is delimited by a first side wall, a second side wall opposite the first side wall, a bottom wall, a top wall opposite the bottom wall, an open front side and a back side opposite the open front side.

The number of stacked compartments can vary from embodiment to embodiment but the number of stacked compartments is at least equal or larger than two, preferably equal or larger than three, more preferably equal or larger than four. In embodiments the number of stacked compartments is for example equal to nine.

Each of the plurality of compartments comprises a power outlet p1, p2, p3, pi for supplying power for charging a rechargeable battery when stored in the compartment and a door d1, d2, d3, di for closing off the open front side of the compartment.

In embodiments, each power outlet is configured to supply power up to 1000 Wh.

In embodiments, each of the compartments has a volume between 0.025 and 0.050 m³. In embodiments, each of the compartments is configured to receive a rechargeable battery having maximum dimensions up to 290x310x600 mm.

Hence, each of the compartments has to be construed as a separate cavity or chamber wherein for instance a rechargeable battery, e.g. a battery for an e-bike, can be stored and being recharged while stored.

In the embodiments shown on Fig.1a to Fig.3b, the compartments have a cuboid shape wherein the first and second side wall are parallel with a plane formed by axes Y and Z, and wherein the bottom side and upper side are parallel with a plane formed by axes X and Y, and wherein the front and back side are parallel with a plane formed by axes X and Z. The axis Z can also be named vertical axis.

In embodiments, the door of each of the compartments comprises an electronic lock that can be unlocked with for example a code. Typically, when a battery needs to be recharged, the user will unlock and open the door of a compartment, e.g. using the code of the lock, insert the rechargeable battery in the compartment and connect the rechargeable battery with the power outlet for charging the rechargeable battery, and finally close the door such that during charging of the rechargeable battery the compartment door is closed. In embodiments, when closing the door, the electronic lock of the door is automatically locking. In other embodiments, the user enters the code for locking the electronic door lock.

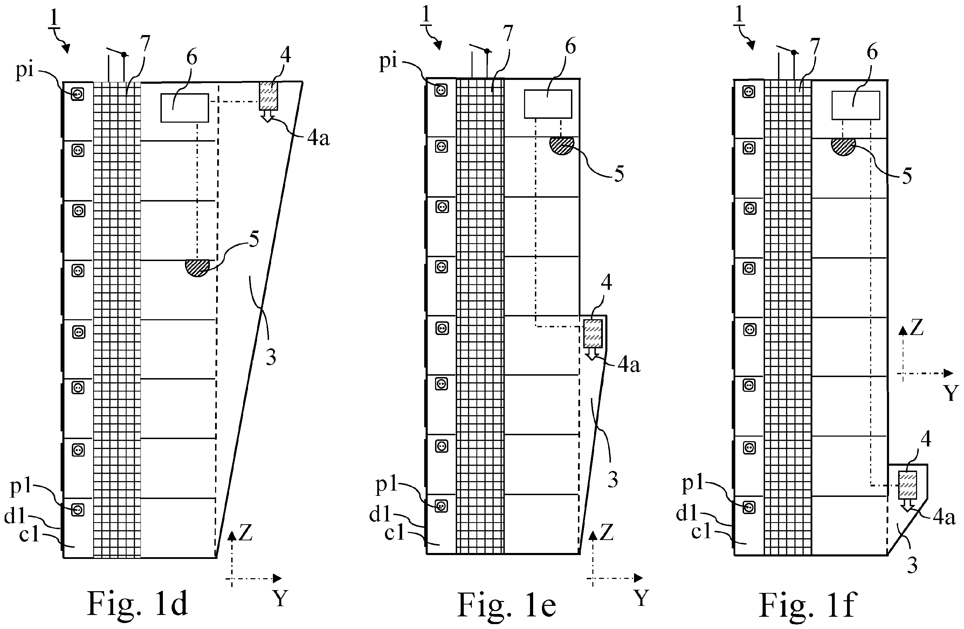

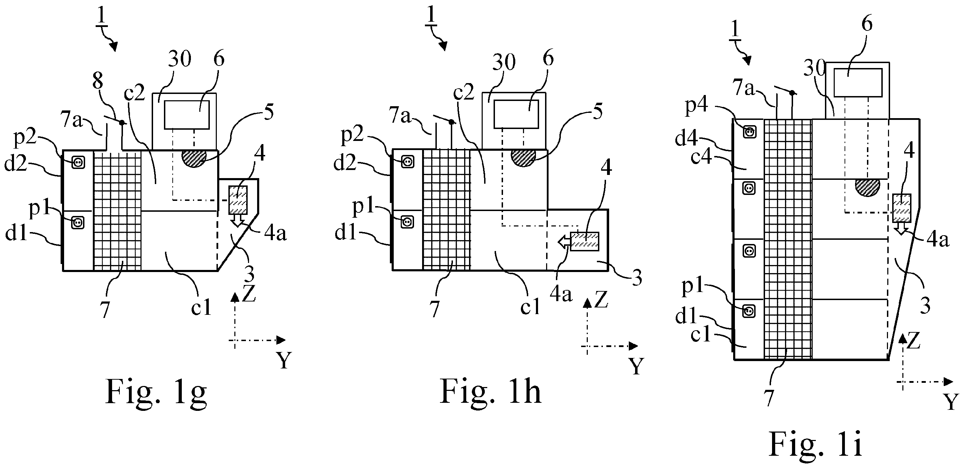

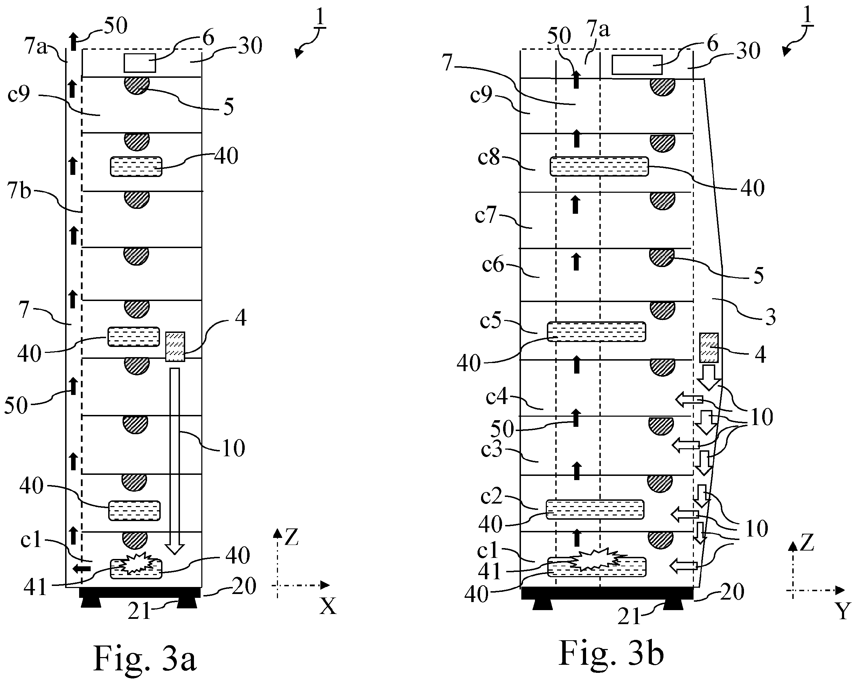

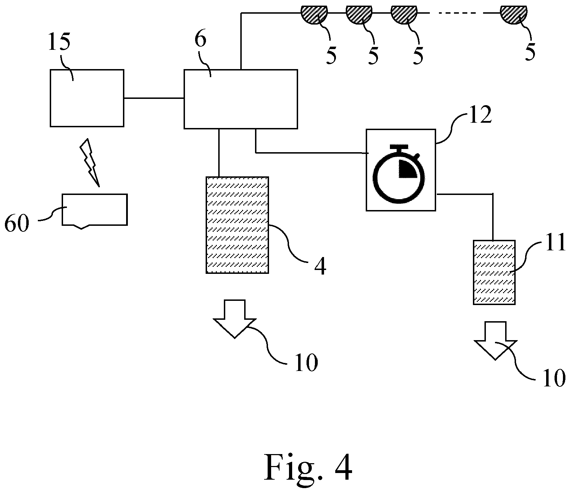

As illustrated for example on Fig.1a to Fig.1i and Fig.3b, the locker cabinet according to the present disclosure comprises an aerosol distribution chamber 3 and a first aerosol generator 4 located within the aerosol distribution chamber 3. The aerosol generator 4 is configured such that when activated an aerosol is released into the aerosol distribution chamber 3. The aerosol generated with the first aerosol generator is to be construed as an aerosol suitable for fire suppression. The locker cabinet according to the invention also comprises a second aerosol generator (11) as is described in more detail hereinbelow in the discussion of Figure 4; this second aerosol generator (11) is not explicitly shown in Figures 1-3 and 5.

The back side of at least the bottom compartment c1 comprises an opening fluidly connected with the aerosol distribution chamber 3 such that when the first aerosol generator is activated the released aerosol flows from the aerosol distribution chamber 3 into the bottom compartment c1 through the opening of the back side of the bottom compartment.

The locker cabinet 1 further comprises at least one smoke detector 5 located within one of the plurality of compartments c1,c2,c3,ci or located within the aerosol distribution chamber 3, an aerosol controller 6 configured for activating the first aerosol generator 4 if a smoke alarm is triggered by the at least one smoke detector 5, and a common chimney 7 configured for evacuating gases from each of the plurality of compartments. The common chimney 7 is to be construed as a dedicated duct or channel for evacuating for instance smoke out of the locker cabinet. In Fig. 1a to Fig.1i, the common chimney 7 is schematically illustrated with a squared pattern.

Each of the plurality of compartments c1,c2,c3,ci comprises a gas evacuation opening fluidly connected with the common chimney 7 such that smoke or any other gas when present in any of the plurality of compartments can evacuate through the common chimney 7.

Hence, the features of aerosol distribution chamber 3, first aerosol generator 4, at least one smoke detector 5, aerosol controller 6 and common chimney 7 are forming a fire suppression system for the locker cabinet 1.

Indeed, battery failures resulting in a fire are still a serious risk. Most common causes are related to charging, e.g. over-charging or bad charging, depletion, e.g. over depletion or too fast depletion or battery damage. Such a failure can trigger an internal thermal runaway followed by the ignition of surrounding materials and other nearby cells, escalating quickly. A battery fire typically starts with serious smoke generation. Hence with the at least one smoke detector 5 of the locker cabinet that is configured for triggering the aerosol generator 4 according to the present disclosure, an alarm is triggered as fast as possible and fire suppression starts quickly. For instance, with the locker cabinet according to the present disclosure one does not wait for heat dispersion before alarming and starting the fire suppression. With the fire suppression based on the smoke detection and the distribution of aerosols in the compartment of the cabinets, a fire retardant effect is obtained which gives a fire brigade the time to come to the scene and to remove the batteries from the locker cabinet and transport them to a safe location for guaranteeing a complete fire extinction of the battery.

In embodiments, as the common chimney fluidly interconnects each of the compartments, one smoke detector located in one of the compartments is sufficient to detect smoke resulting from a fire of a battery located in any of the compartments. This is for example schematically illustrated on Fig.1a and Fig.1c to Fig.1i where one smoke detector 5 is installed in one of the compartments. In other embodiments, multiple smoke detectors can be installed.

In embodiments, as for example illustrated on Fig.1b, one smoke detector can be installed in the aerosol distribution chamber 3. Also for this embodiment, when smoke is initiated in any of the compartments it will distribute to the other compartments through the common chimney 7 and further to the aerosol distribution chamber 3 via the opening in the backside of the at least bottom compartment c1.

In further embodiments a smoke detector 5 can be installed in each of the compartments of the locker cabinets, as for example schematically illustrated on Fig.3a and Fig.3b where a smoke detector 5 is installed in each of the nine compartments c1 to c9. Installing multiple smoke detectors increases the security, e.g. in case of failure of one of the smoke detectors, any smoke present in any of the compartments of the locker cabinet will be detected with a further smoke detector in another compartment as all compartments are fluidly connected through the common chimney.

In embodiments, as schematically illustrated for example on Fig.1a to 1i, an exit 7a of the common chimney 7 comprises a pressure relief valve 8 configured for opening or closing the exit 7a of the common chimney 7. During normal operation of the locker cabinet, i.e. when no fire is present in any compartment, the pressure relief valve is closed.

In embodiments, the pressure relief valve 8 is configured for opening or closing the exit of the common chimney if a pressure inside the common chimney 7 is respectively above or below a threshold value.

In embodiments, the pressure relief valve 8 is configured for opening or closing the exit of the common chimney if a pressure difference between a pressure inside the common chimney 7 and a local outdoor atmospheric pressure is respectively above or below a threshold value.

For instance when aerosol is released, pressure is increasing and smoke or air in the cabinet is pushed out through the chimney and the pressure relief valve opens and air is evacuated out of the cabinet. As soon as the pressure drops, the pressure relief valve closes again. In this way the aerosol is maintained in the locker cabinet and no fresh air from the outside can enter the locker cabinet through the common chimney.

The locker cabinet is for example made out of multiple steel plates that are welded together in such a way that the locker cabinet is as much as possible air tight when all doors of the locker cabinet are closed. In this way, when a fire occurs, no fresh air from the outside can enter the locker cabinet or at least the air that could enter through small splits or crevices in the locker cabinet is strongly reduced. A locker cabinet manufactured with welded steel plates results in cost effective locker cabinet.

In embodiments, each door d1, d2, d3, di of the plurality of compartments comprises a seal for sealingly closing off the front side of the compartment when the doors of the locker cabinet are closed. The seal is for example a circumferential gasket.

As discussed above, at least the back side of the bottom compartment comprises an opening fluidly connected with the aerosol distribution chamber. In embodiments, this opening in the backside of the bottom compartment comprises a wire mesh. In this way, when inserting a rechargeable battery into the bottom compartment, the battery cannot further be pushed or accidentally enter into the aerosol distribution chamber.

In embodiments, the aerosol distribution chamber 3 is configured for distributing an aerosol towards multiple compartments. For example, for embodiments wherein the locker cabinet comprises more than three compartments, the aerosol distribution chamber 3 is configured for distributing an aerosol towards at least the back side of the bottom compartment and the back side of the compartment located on top of the bottom compartment. In these embodiments, at least the back side of the bottom compartment and the back side of the compartment located on top of the bottom compartment each comprise an opening fluidly connected with the aerosol distribution chamber 3.

In embodiments, as for example schematically illustrated on Fig.1a to Fig.1d and Fig.3b the back side of each of the plurality of compartments c1,c2,c3,ci comprises an opening fluidly connected with the aerosol distribution chamber 3. For example, the back side of each compartment can be a fully open side in fluid connection with the aerosol distribution chamber.

In embodiments, wherein each of the compartments has a backside with an opening fluidly connected with the aerosol distribution chamber, each of the openings of the back side of the plurality of compartments comprises a wire mesh. As mentioned above, the wire mesh prohibits the user to push the battery too far inside the compartment such that it could fall inside the aerosol distribution chamber.

In embodiments a single wire mesh plate, e.g. made out of metal, extending from the bottom to the top of the locker cabinet is provided that is configured for covering each of the openings of the back side of the compartments of the locker cabinet.

With reference to Fig.1e to Fig.1h, examples of embodiments are shown wherein not all compartments have an opening in the backside that is fluidly connected with the aerosol distribution chamber 3. For example in the embodiment of Fig.1e, having eight compartments, only the four lowest compartments have an opening in the back side that is fluidly connected with the aerosol distribution chamber. In these embodiments the compartments that do not have an opening in the backside will receive aerosols through the common chimney 7.

With reference to Fig.1f, Fig.1g and Fig.1h an embodiment of a locker cabinet 1 is shown wherein only the backside of the bottom compartment c1 comprises an opening that is fluidly connected with the aerosol chamber 3.

The occurrence of a fire 41 in a rechargeable battery 40 located in a compartment of a locker cabinet according to the present disclosure is, as an example, schematically illustrated on Fig.3a and Fig.3b. In this example there is a rechargeable battery 40 stored in compartments c1, c2, c5 and c8, and a fire 41 is initiated in the rechargeable battery 40 located in the bottom compartment c1. The generated smoke 50 indicated with black arrows will enter the chimney 7 and escape from the locker cabinet through the chimney 7. As a result of a smoke detection with any of the smoke detectors 5, the aerosol generator 4 is activated and an aerosol flow 10, illustrated with white arrows, is released in the aerosol chamber 3 and flows towards the backside of at least the bottom compartment where it enters the bottom compartment through the opening in the back side.

An aerosol generator 4 for fire suppression is known in the art and is commercially available. An aerosol generator 4 is to be construed as any device that is suitable for generating an aerosol for suppressing a fire. In embodiments, the first aerosol generator 4 comprises at least one cannister filled with a solid compound, e.g. a potassium compound, that upon activation of the aerosol generator is transformed into an aerosol. The compound is generally also named FPC, Fire Protecting Compound. Commercial FPC cannisters exists in different sizes and they are generally specified by the weight of the compound in the cannister, for example cannisters filled with 100 gram or 200 gram of FPC compounds. An aerosol is hereby defined as a 2-phased media consisting of solid particles suspended in a gas. In embodiments according to the present disclosure, the first aerosol generator comprises one cannister, for example a cannister of 100 gram or a cannister of 200 gram FPC compound. In other embodiments, the first aerosol generator comprises multiple cannisters, for example two cannisters of 100 gram FPC compound, or two cannisters of 200 gram compound.

The aerosol generator typically comprises an electrical actuator to initiate the transformation of the solid compound into an aerosol and to release the aerosol out of the aerosol generator. In embodiments, the activation of the electrical actuator of the aerosol generator is controlled by the aerosol controller 6. In embodiments wherein the first aerosol generator comprises multiple cannisters of FPC compound, for example two cannisters, then following a smoke alarm, each of the cannisters of the first aerosol generator are activated at the same time.

The aerosol generator 4 typically comprises an aerosol outlet 4a, as schematically shown on Fig.1a to Fig1i. In embodiments, the first aerosol generator 4 is oriented such that when the first aerosol generator 4 is activated a flow of aerosol is released through the aerosol outlet 4a in a direction towards, or at least partly towards, the backside of the bottom compartment c1. In this way, following activation of the aerosol generator, a flow of aerosol is guided to the backside of the bottom compartment and enters the bottom compartment c1 through the opening in the backside of the bottom compartment. For example, on Fig.1a to Fig.1i, the aerosol outlet 4a is schematically illustrated with an arrow wherein the direction of the arrow indicates a direction of the aerosol flow when exiting the aerosol outlet 4a.

In embodiments wherein the backside of multiple compartments is fluidly connected with the aerosol distribution chamber, when the aerosol generator is activated the aerosol will flow to the backside of multiple compartments and hence enter multiple compartments. This is schematically illustrated on Fig.3b where each of the compartments has an opening in the backside and wherein the outlet of the aerosol generator is pointing downwards towards the bottom compartment. The white arrows on Fig.3b indicate a flow 10 of aerosols after activation of the aerosol generator. In this embodiment, the aerosol will mainly enter the backside of compartments c1, c2, c3 and c4. The other compartments, c5 to c9, on top of compartment c4 will receive aerosols through for instance the common chimney 7 and the gas evacuation opening in the compartments that are fluidly connected with the common chimney 7.

As discussed above, each of the plurality of compartments c1,c2,c3,ci of the locker cabinet comprises a gas evacuation opening fluidly connected with the common chimney 7. In embodiments, for each of the plurality of compartments the gas evacuation opening to the chimney comprises a wire mesh. In this way it is avoided that an object stored in the locker would fall in the common chimney.

In embodiments, as for example schematically illustrated on Fig.3a, a wire mesh plate, indicated with reference 7b, is extending form the bottom compartment to the upper compartment and is configured for covering each of the gas evacuation openings of the compartments.

For providing a common chimney for the plurality of compartments of the locker cabinet, different mechanical solutions can be envisioned by the person skilled in the art. In embodiments, the common chimney 7 is coupled to each of the first side walls of the plurality of compartments and wherein for each of the compartments the gas evacuation opening corresponds to a wall opening through the first side wall giving access to the common chimney. For these embodiments, the common chimney 7 can also be named side duct.

In embodiments, the common chimney can have a rectangular cross-section. For instance a cross-section of the common chimney with a plane parallel with the plane X-Y shown on Fig.1a to Fig.3b, has a rectangular shape. In other embodiments, the chimney can have any other suitable cross-section.

In embodiments, as illustrated for example on Fig.1a to Fig.3b, the plurality of compartments are stacked along a vertical axis Z and the common chimney 7 is elongating parallel with the vertical axis Z from a bottom side of the chimney to an upper side of the common chimney.

In embodiments, when the locker cabinet is positioned in an operational position, the vertical axis Z is parallel with an axis of gravitation.

In embodiments, as illustrated on Fig.3a and Fig.3b, the locker cabinet comprises 1 a base 20 supporting the stacked compartments. In embodiments, the base 20 comprises a plurality of feet 21, for example four feet to facilitate the positioning of the locker cabinet 1 on a floor.

In embodiments, the aerosol distribution chamber 3 is elongating parallel with the vertical axis Z and is forming a back side of the locker cabinet 1. In these embodiments, the aerosol distribution chamber could also be named rear duct.

In embodiments a cross-section of the aerosol chamber 3 with a plane perpendicular to the vertical axis Z has a rectangular shape.

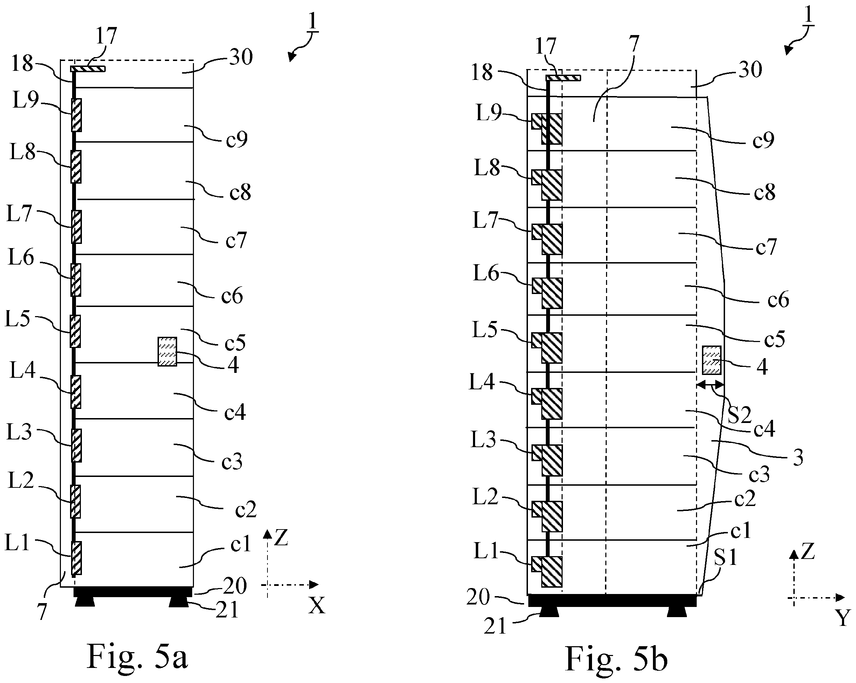

In embodiments, as illustrated on Fig.5b, a first cross-section S1 of the distribution chamber 3 with a plane perpendicular to the vertical axis Z measured at the lower end of the aerosol distribution chamber 3 is smaller than a second cross-section S2 of the distribution chamber 3 with a plane perpendicular to the vertical axis Z measured at a location of the first aerosol generator 4.

In embodiments, the cross-section of the aerosol distribution chamber with a plane perpendicular to the vertical axis Z is increasing when moving along the vertical axis Z from the lower end of the aerosol distribution chamber towards the location of the first aerosol generator 4. In embodiments this increasing of the cross-section is a linear increase.

The variation of the cross-section of the aerosol distribution chamber guides the aerosols and improves the efficient distribution of aerosol to a plurality of compartments such that each of the plurality of compartments receives a similar amount of aerosol.

According to the invention, the locker cabinet comprises a second aerosol generator 11 located within the aerosol distribution chamber 3 and configured such that when activated a further aerosol is released into the aerosol distribution chamber 3 after a given predefined time delay time has elapsed since the activation of the first aerosol generator 4. This is schematically illustrated in Fig.4, wherein for example a delay relay 12 between an activation output of the aerosol controller 6 and the second aerosol generator 11 is installed. For example, the delay relay 12 can be set to a value for example between ten and thirty minutes. Typically, the first aerosol generator has a capacity to release a flow of aerosol during 5 to 10 seconds. The second aerosol generator releasing a second flow of aerosol, can be construed as a safety backup generator for the situation wherein for example small air leaks would potentially re-ignition the fire. With the second aerosol generator it is guaranteed that the fire department can be present at the scene in due time before a raging fire would occur.

In embodiments, the second aerosol generator, as is the case for embodiments of the first aerosol generator, comprises at least one cannister filled with an FPC compound. In embodiments, the second aerosol generator comprises one cannister filled with an FPC compound, in other embodiments the second aerosol generator comprises multiple cannisters filled with an FPC compound, for example two cannisters.

In embodiments, the first aerosol generator comprises one cannister of 200 gram FPC compound and the second aerosol generator comprises one cannister of 100 gram FPC. In other embodiments, the first aerosol generator comprises one cannister of 200 gram FPC compound and the second aerosol generator comprises also one cannister of 200 gram FPC.

In embodiments, the second aerosol generator 11 is installed at a same height along the vertical axis Z as the first aerosol generator 4 and the first and second aerosol generator are separated by a given distance measured along the X axis.

In embodiments, the second aerosol generator is oriented such that when activated aerosol of the second aerosol generator flows in the same direction as aerosol generated by the first aerosol generator.

In embodiments, as further illustrated on Fig.4, the locker cabinet can further comprise a main controller 15 coupled with the aerosol controller 6. The main controller 15 can also be named locker controller and is configured for sending out an alarm message 60, for instance to a fire department. In embodiments, this alarm message can be send out via a phone. In embodiments, the alarm message is a text message transmitted by phone or by e-mail. In embodiments, the main controller 15 sends out the alarm message 60 when receiving an alarm or error signal from the aerosol controller 6. This aerosol controller 6 generates this alarm or error signal as soon as one of the smoke detectors 5 has triggered a smoke alarm.

In embodiments, the aerosol controller 6 is installed on top of the locker cabinets, e.g. on the roof of the locker cabinet. In embodiments, as illustrated on Fig.3a and Fig.3b, the locker cabinet comprises a dedicated technical compartment 30, for example on top of the upper compartment c9, that comprises the aerosol controller 6. In other embodiments, as illustrated on Fig.1a to Fig.1f, the aerosol controller is located in the upper compartment, in which case the upper compartment is permanently locked and not used for charging a rechargeable battery.

With reference to Fig.5a and Fig.5b, cross-sectional views respectively in a plane X-Z and a plane Y-Z are schematically shown of an example of a locker cabinet according to the present disclosure wherein each compartment, in this example nine compartments c1 to c9, comprises a corresponding door lock L1 to L9. Each door lock L1 to L9 comprises an emergency release lever to unlock the door of the compartment, i.e. without making use of a door code, and the locker cabinet comprises a lock interconnector 18 that is interconnecting each of the emergency release levers towards a main release lever 17 located in the upper compartment or located in the technical compartment 30 on top of the upper compartment c9. The emergency release levers of each door lock, the lock interconnector 18 and the main release lever 17 are configured such that when activating the main release lever 17, all doors of the compartments will pop open.

If the main release lever 17 is located in the upper compartment, this compartment will be locked at all time and will be opened by the personnel of the fire department in case of a fire.

Typically, when the fire response team arrives on the scene following a fire alarm of the locker cabinet, the fire response team will perform the following actions: open all the lockers using the emergency release lever, cool the batteries with CO₂ fire extinguishers, remove damaged batteries from the locker cabinet, submerge batteries having taken fire in a metal container filled with water.

The inventors have performed experiments with Li-ion and Li-polymer batteries and a locker cabinet according to the present disclosure to demonstrated that a fire suppression can effectively be performed when a battery fire occurs in any of the batteries stored in the locker cabinet. With the experiments it was demonstrated that a fire retardation of respectively 60 minutes and 30 minutes is obtained for high-capacity Li-ion and Li-polymer batteries, which gives sufficient time to alarm and have the fire brigade present in due time on the scene.

The present disclosure is also related to a battery charging system comprising a plurality of locker cabinets positioned adjacently to each other. Indeed, the locker cabinet according to the present disclosure can be construed as a locker cabinet module and by placing multiple modules adjacently together a larger battery charging system is formed. These battery charging systems can for example be installed outdoor near an apartment building or public building.

### Reference numbers

| | |
|---|---|
| 1 | Locker cabinet |
| c1,c2,c3,ci | compartment |
| d1, d2,d3, di | door |
| p1, p2, p3, pi | power outlet |
| 3 | Aerosol supply chamber |
| 4 | First Aerosol generator |
| 4a | Aerosol outlet |
| 5 | Smoke detector |
| 6 | aerosol controller |
| 7 | chimney |
| 7a | exit of chimney |
| 7b | wire mesh |
| 8 | pressure relief valve |
| 10 | Aerosol flow |
| 11 | Second aerosol generator |
| 12 | Delay relay |
| 15 | Main controller |
| 17 | Main release lever |
| 18 | Lock interconnector |
| 20 | Base of locker cabinet |
| 21 | feet |
| 30 | technical compartment |
| 40 | rechargeable battery |
| 41 | fire |
| 50 | smoke |
| 60 | message |

## Claims

1. A locker cabinet (1) for storing and charging rechargeable batteries, the locker cabinet comprising a plurality of compartments (c1 ,c2,c3,ci) stacked on top of each other starting from a bottom compartment (c1) up to a top compartment, and wherein each of the compartments is delimited by a first side wall, a second side wall opposite the first side wall, a bottom wall, a top wall opposite the bottom wall, an open front side and a back side opposite the open front side,
wherein each of the plurality of compartments comprises:
• a power outlet (p1, p2, p3, pi) for supplying power for charging a rechargeable battery when stored in the compartment, and
• a door (d1, d2, d3, di) for closing off the open front side of the compartment,
wherein the locker cabinet (1) further comprises:
• an aerosol distribution chamber (3),
• a first aerosol generator (4) located within said aerosol distribution chamber (3) and configured such that when activated an aerosol is released into the aerosol distribution chamber (3),
• at least one smoke detector (5) located within one of said plurality of compartments (c1,c2,c3,ci) or located within the aerosol distribution chamber (3),
• an aerosol controller (6) configured for activating the first aerosol generator (4) if a smoke alarm is triggered by the at least one smoke detector (5),
• a common chimney (7) configured for evacuating gases from each of the plurality of compartments,
wherein each of the plurality of compartments (c1,c2,c3,ci) comprises a gas evacuation opening fluidly connected with said common chimney (7) such that smoke or any other gas when present in any of the plurality of compartments can evacuate through the common chimney (7),
and wherein the back side of at least the bottom compartment (c1) comprises an opening fluidly connected with the aerosol distribution chamber (3) such that when the first aerosol generator is activated the released aerosol flows from the aerosol distribution chamber (3) into the bottom compartment (c1) through said opening of the back side of the bottom compartment;
**characterized in that** the locker cabinet (1) further comprises a second aerosol generator (11) located within said aerosol distribution chamber (3) and configured such that when activated a further aerosol is released into the aerosol distribution chamber (3) after a given predefined time delay has elapsed since the activation of the first aerosol generator (4), and a delay relay (12) configured for defining said predefined time delay.

2. The locker cabinet of claim 1 wherein an exit (7a) of said common chimney (7) comprises a pressure relief valve (8) configured for opening or closing the exit (7a) of the common chimney (7).

3. The locker cabinet of claim 2 wherein said pressure relief valve (8) is configured for opening or closing the exit of the common chimney if a pressure inside the common chimney (7) is respectively above or below a threshold value or wherein said pressure relief valve (8) is configured for opening or closing the exit of the common chimney if a pressure difference between a pressure inside the common chimney (7) and a local outdoor atmospheric pressure is respectively above or below a threshold value.

4. The locker cabinet of any of previous claims wherein each door (d1, d2, d3, di) of said plurality of compartments comprises a seal for sealingly closing off the front side of the compartment.

5. The locker cabinet (1) according to any of previous claims wherein the opening in the backside of the bottom compartment comprises a wire mesh.

6. The locker cabinet (1) according to any of previous claims comprising more than three compartments and wherein the aerosol distribution chamber (3) is configured for distributing an aerosol towards at least the back side of the bottom compartment and the back side of the compartment located on top of the bottom compartment, and wherein at least the back side of the bottom compartment and the back side of the compartment located on top of the bottom compartment each comprise an opening fluidly connected with the aerosol distribution chamber (3).

7. The locker cabinet (1) according to any of claims 1 to 5 wherein the back side of each of the plurality of compartments (c1,c2,c3,ci) comprises an opening fluidly connected with the aerosol distribution chamber (3).

8. The locker cabinet (1) according to claim 7 wherein each of the openings of the back side of the plurality of compartments comprises a wire mesh (7b).

9. The locker cabinet (1) according to any of previous claims wherein for each of the plurality of compartments the gas evacuation opening comprises a wire mesh.

10. The locker cabinet (1) according to any of previous claims wherein said first aerosol generator (4) comprises an aerosol outlet (4a), and wherein the first aerosol generator (4) is oriented such that when activated a flow of aerosol is released through the aerosol outlet (4a) in a direction towards or at least partly towards the backside of the bottom compartment.

11. The locker cabinet (1) according to any of previous claims wherein the common chimney (7) is coupled to each of the first side walls of the plurality of compartments and wherein for each of the compartments said gas evacuation opening corresponds to a wall opening through said first side wall giving access to the common chimney.

12. The locker cabinet (1) according to any of previous claims wherein said plurality of compartments are stacked along a vertical axis (Z), preferably said common chimney (7) is elongating parallel with the vertical axis (Z) from a bottom side of the common chimney to an upper side of the common chimney.

13. The locker cabinet (1) of claim 12 wherein said aerosol distribution chamber (3) is elongating parallel with said vertical axis (Z) from a lower end to an upper end of the aerosol distribution chamber (3), and wherein a first cross-section (S1) of the distribution chamber (3) with a plane perpendicular to said vertical axis (Z) measured at said lower end of the aerosol distribution chamber (3) is smaller than a second cross-section (S2) of the distribution chamber (3) with a plane perpendicular to said vertical axis (Z) measured at a location of the aerosol generator, preferably the cross-section of the aerosol distribution chamber with a plane perpendicular to the vertical axis (Z) is increasing when moving along the vertical axis (Z) from the lower end of the aerosol distribution chamber towards the location of the first aerosol generator (4).

14. The locker cabinet according to any of previous claims further comprising a main controller (15) coupled with the aerosol controller (6), and wherein the main controller (15) is configured for sending out an alarm message (60) to a fire department following a triggering of a smoke alarm with the at least one smoke detector (5).

## Patentansprüche

1. Schließfachschrank (1) zum Aufbewahren und Laden von wiederaufladbaren Batterien, wobei der Schließfachschrank eine Vielzahl von Fächern (c1, c2, c3, ci) umfasst, die angefangen mit einem unteren Fach (c1) bis zu einem oberen Fach aufeinander gestapelt sind, und wobei jedes der Fächer durch eine erste Seitenwand, eine zweite Seitenwand gegenüber der ersten Seitenwand, eine untere Wand, eine obere Wand gegenüber der unteren Wand, eine offene Vorderseite und eine Rückseite gegenüber der offenen Vorderseite begrenzt ist, wobei jedes der Vielzahl von Fächern Folgendes umfasst:
• einen Stromausgang (p1, p2, p3, pi) zum Liefern von Strom zum Laden einer wiederaufladbaren Batterie, wenn diese in dem Fach aufbewahrt wird, und
• eine Tür (d1, d2, d3, di) zum Abschließen der offenen Vorderseite des Fachs, wobei der Schließfachschrank (1) ferner Folgendes umfasst:
• eine Aerosolverteilungskammer (3),
• einen ersten Aerosolgenerator (4), der sich innerhalb der Aerosolverteilungskammer (3) befindet und so konfiguriert ist, dass, wenn er aktiviert wird, ein Aerosol in die Aerosolverteilungskammer (3) freigegeben wird,
• mindestens einen Rauchmelder (5), der sich innerhalb eines der Vielzahl von Fächern (c1, c2, c3, ci) befindet oder innerhalb der Aerosolverteilungskammer (3) befindet,
• eine Aerosolsteuerung (6), die zum Aktivieren des ersten Aerosolgenerators (4) konfiguriert ist, wenn ein Rauchalarm durch den mindestens einen Rauchmelder (5) ausgelöst wird,
• einen gemeinsamen Rauchabzug (7), der konfiguriert ist, um Gase aus jedem der Vielzahl von Fächern abzuführen,
wobei jedes der Vielzahl von Fächern (c1, c2, c3, ci) eine Gasabführungsöffnung umfasst, die fluidisch mit dem gemeinsamen Rauchabzug (7) verbunden ist, so dass Rauch oder ein beliebiges anderes Gas, wenn es in einer der Vielzahl von Fächern vorhanden ist, durch den gemeinsamen Rauchabzug (7) abgeführt werden kann,
und wobei die Rückseite mindestens des unteren Fachs (c1) eine Öffnung umfasst, die fluidisch mit der Aerosolverteilungskammer (3) verbunden ist, so dass, wenn der erste Aerosolgenerator aktiviert wird, das freigegebene Aerosol aus der Aerosolverteilungskammer (3) in das untere Fach (c1) durch die Öffnung der Rückseite des unteren Fachs strömt;
**dadurch gekennzeichnet, dass** der Schließfachschrank (1) ferner einen zweiten Aerosolgenerator (11), der sich innerhalb der Aerosolverteilungskammer (3) befindet und so konfiguriert ist, dass, wenn er aktiviert wird, ein weiteres Aerosol in die Aerosolverteilungskammer (3) freigegeben wird, nachdem eine gegebene vorab definierte Zeitverzögerung seit der Aktivierung des ersten Aerosolgenerators (4) verstrichen ist, und ein Verzögerungsrelais (12), das konfiguriert ist, um die vorab definierte Zeitverzögerung zu definieren, umfasst.

2. Schließfachschrank nach Anspruch 1, wobei ein Ausgang (7a) des gemeinsamen Rauchabzugs (7) ein Druckentlastungsventil (8) umfasst, das zum Öffnen oder Schließen des Ausgangs (7a) des gemeinsamen Rauchabzugs (7) konfiguriert ist.

3. Schließfachschrank nach Anspruch 2, wobei das Druckentlastungsventil (8) zum Öffnen oder Schließen des Ausgangs des gemeinsamen Rauchabzugs konfiguriert ist, wenn ein Druck innerhalb des gemeinsamen Rauchabzugs (7) jeweils über oder unter einem Schwellenwert liegt, oder wobei das Druckentlastungsventil (8) zum Öffnen oder Schließen des Ausgangs des gemeinsamen Rauchabzugs konfiguriert ist, wenn eine Druckdifferenz zwischen einem Druck innerhalb des gemeinsamen Rauchabzugs (7) und einem lokalen atmosphärischen Außenbereichsdruck jeweils über oder unter einem Schwellenwert liegt.

4. Schließfachschrank nach einem der vorherigen Ansprüche, wobei jede Tür (d1, d2, d3, di) der Vielzahl von Fächern eine Dichtung zum dichtenden Abschließen der Vorderseite des Fachs umfasst.

5. Schließfachschrank (1) nach einem der vorherigen Ansprüche, wobei die Öffnung in der Rückseite des unteren Fachs ein Drahtgeflecht umfasst.

6. Schließfachschrank (1) nach einem der vorherigen Ansprüche umfassend mehr als drei Fächer, und wobei die Aerosolverteilungskammer (3) zum Verteilen eines Aerosols mindestens zu der Rückseite des unteren Fachs und der Rückseite des Fachs, das sich auf dem unteren Fach befindet, konfiguriert ist, und wobei mindestens die Rückseite des unteren Fachs und die Rückseite des Fachs, das sich auf dem unteren Fach befindet, jeweils eine Öffnung umfassen, die fluidisch mit der Aerosolverteilungskammer (3) verbunden ist.

7. Schließfachschrank (1) nach einem der Ansprüche 1 bis 5, wobei die Rückseite jedes der Vielzahl von Fächern (c1, c2, c3, ci) eine Öffnung umfasst, die fluidisch mit der Aerosolverteilungskammer (3) verbunden ist.

8. Schließfachschrank (1) nach Anspruch 7, wobei jede der Öffnungen der Rückseite der Vielzahl von Fächern ein Drahtgeflecht (7b) umfasst.

9. Schließfachschrank (1) nach einem der vorherigen Ansprüche, wobei für jedes der Vielzahl von Fächern die Gasabführungsöffnung ein Drahtgeflecht umfasst.

10. Schließfachschrank (1) nach einem der vorherigen Ansprüche, wobei der erste Aerosolgenerator (4) einen Aerosolauslass (4a) umfasst, und wobei der erste Aerosolgenerator (4) so ausgerichtet ist, dass, wenn er aktiviert wird, ein Aerosolstrom durch den Aerosolauslass (4a) in einer Richtung zu oder mindestens teilweise zu der Rückseite des unteren Fachs hin freigegeben wird.

11. Schließfachschrank (1) nach einem der vorherigen Ansprüche, wobei der gemeinsame Rauchabzug (7) mit jeder der ersten Seitenwände der Vielzahl von Fächern verbunden ist, und wobei für jedes der Fächer die Gasabführungsöffnung einer Wandöffnung durch die erste Seitenwand entspricht, die Zugang zu dem gemeinsamen Rauchabzug gewährt.

12. Schließfachschrank (1) nach einem der vorherigen Ansprüche, wobei die Vielzahl von Fächern entlang einer vertikalen Achse (Z) gestapelt sind, wobei sich vorzugsweise der gemeinsame Rauchabzug (7) parallel zu der vertikalen Achse (Z) von einer Unterseite des gemeinsamen Rauchabzugs zu einer Oberseite des gemeinsamen Rauchabzugs ausdehnt.

13. Schließfachschrank (1) nach Anspruch 12, wobei sich die Aerosolverteilungskammer (3) parallel zu der vertikalen Achse (Z) von einem unteren Ende zu einem oberen Ende der Aerosolverteilungskammer (3) ausdehnt, und wobei ein erster Querschnitt (S1) der Verteilungskammer (3) mit einer Ebene senkrecht zu der vertikalen Achse (Z), die an dem unteren Ende der Aerosolverteilungskammer (3) gemessen wird, kleiner als ein zweiter Querschnitt (S2) der Verteilungskammer (3) mit einer Ebene senkrecht zu der vertikalen Achse (Z), die an einer Stelle des Aerosolgenerators gemessen wird, ist, wobei vorzugsweise der Querschnitt der Aerosolverteilungskammer mit einer Ebene senkrecht zu der vertikalen Achse (Z) bei einer Bewegung entlang der vertikalen Achse (Z) von dem unteren Ende der Aerosolverteilungskammer zu der Stelle des ersten Aerosolgenerators (4) hin größer wird.

14. Schließfachschrank nach einem der vorherigen Ansprüche, ferner umfassend eine Hauptsteuerung (15), die mit der Aerosolsteuerung (6) verbunden ist, und wobei die Hauptsteuerung (15) zum Aussenden einer Alarmnachricht (60) an die Feuerwehr auf das Auslösen eines Rauchalarms mit dem mindestens einen Rauchmelder (5) konfiguriert ist.

## Revendications

1. Armoire à casiers (1) pour le stockage et la recharge de batteries rechargeables, l'armoire à casiers comprenant une pluralité de compartiments (c1, c2, c3, ci) empilés les uns sur les autres, à partir d'un compartiment inférieur (c1) jusqu'à un compartiment supérieur, et dans laquelle chacun des compartiments est délimité par une première paroi latérale, une seconde paroi latérale opposée à la première, une paroi inférieure, une paroi supérieure opposée à la paroi inférieure, une face avant ouverte et une face arrière opposée à la face avant ouverte,
dans laquelle chacun de la pluralité de compartiments comprend :
• une prise électrique (p1, p2, p3, pi) pour fournir de l'énergie pour recharger une batterie rechargeable lorsqu'elle est stockée dans le compartiment, et
• une porte (d1, d2, d3, di) pour fermer la face avant ouverte du compartiment,
dans laquelle l'armoire à casiers (1) comprend en outre :
• une chambre de distribution d'aérosol (3),
• un premier générateur d'aérosol (4) situé à l'intérieur de ladite chambre de distribution d'aérosol (3) et configuré de manière à libérer un aérosol dans la chambre de distribution d'aérosol (3) lorsqu'il est activé,
• au moins un détecteur de fumée (5) situé à l'intérieur de l'un de ladite pluralité de compartiments (c1, c2, c3, ci) ou situé à l'intérieur de la chambre de distribution d'aérosol (3),
• une unité de commande d'aérosol (6) configurée pour activer le premier générateur d'aérosol (4) si une alarme de fumée est déclenchée par l'au moins un détecteur de fumée (5),
• une cheminée commune (7) configurée pour évacuer les gaz provenant de chacun de la pluralité de compartiments,
dans laquelle chacun de la pluralité de compartiments (c1, c2, c3, ci) comprend une ouverture d'évacuation de gaz reliée à fluide à ladite cheminée commune (7), de sorte que de la fumée ou tout autre gaz présent dans l'un quelconque de la pluralité de compartiments puisse être évacué à travers la cheminée commune (7),
et dans laquelle la face arrière de l'au moins un compartiment inférieur (c1) comprend une ouverture reliée à fluide à la chambre de distribution d'aérosol (3) de sorte que, lorsque le premier générateur d'aérosol est activé, l'aérosol libéré s'écoule à partir de la chambre de distribution d'aérosol (3) jusque dans le compartiment inférieur (c1) à travers ladite ouverture de la face arrière du compartiment inférieur ;
**caractérisé en ce que** l'armoire à casiers (1) comprend en outre un second générateur d'aérosol (11) situé à l'intérieur de ladite chambre de distribution d'aérosol (3) et configuré de sorte que, lorsqu'il est activé, un aérosol supplémentaire est libéré dans la chambre de distribution d'aérosol (3) après l'écoulement d'un délai prédéfini donné depuis l'activation du premier générateur d'aérosol (4), et un relais temporisé (12) configuré pour définir ledit délai prédéfini.

2. Armoire à casiers selon la revendication 1, dans laquelle une sortie (7a) de ladite cheminée commune (7) comprend une soupape de surpression (8) configurée pour ouvrir ou fermer la sortie (7a) de la cheminée commune (7).

3. Armoire à casiers selon la revendication 2, dans laquelle ladite soupape de surpression (8) est configurée pour ouvrir ou fermer la sortie de la cheminée commune si une pression à l'intérieur de la cheminée commune (7) est respectivement au-dessus ou au-dessous d'une valeur de seuil, ou dans laquelle ladite soupape de surpression (8) est configurée pour ouvrir ou fermer la sortie de la cheminée commune si une différence de pression entre une pression à l'intérieur de la cheminée commune (7) et une pression atmosphérique extérieure locale est respectivement au-dessus ou au-dessous d'une valeur de seuil.

4. Armoire à casiers selon l'une quelconque des revendications précédentes, dans laquelle chaque porte (d1, d2, d3, di) de ladite pluralité de compartiments comprend un joint pour hermétiquement sceller la face avant du compartiment.

5. Armoire à casiers (1) selon l'une quelconque des revendications précédentes, dans laquelle l'ouverture à l'arrière du compartiment inférieur comprend un treillis métallique.

6. Armoire à casiers (1) selon l'une quelconque des revendications précédentes, comprenant plus de trois compartiments, et dans laquelle la chambre de distribution d'aérosol (3) est configurée pour distribuer un aérosol vers au moins la face arrière du compartiment inférieur et la face arrière du compartiment situé au-dessus du compartiment inférieur, et dans laquelle au moins la face arrière du compartiment inférieur et la face arrière du compartiment situé au-dessus du compartiment inférieur comprennent chacune une ouverture reliée à fluide à la chambre de distribution d'aérosol (3).

7. Armoire à casiers (1) selon l'une quelconque des revendications 1 à 5, dans laquelle la face arrière de chacun de la pluralité de compartiments (c1, c2, c3, ci) comprend une ouverture reliée à fluide à la chambre de distribution d'aérosol (3).

8. Armoire à casiers (1) selon la revendication 7, dans laquelle chacune des ouvertures de la face arrière de la pluralité de compartiments comprend un treillis métallique (7b).

9. Armoire à casiers (1) selon l'une quelconque des revendications précédentes, dans laquelle pour chacun de la pluralité de compartiments, l'ouverture d'évacuation de gaz comprend un treillis métallique.

10. Armoire à casiers (1) selon l'une quelconque des revendications précédentes, dans laquelle ledit premier générateur d'aérosol (4) comprend une sortie d'aérosol (4a), et dans laquelle le premier générateur d'aérosol (4) est orienté de sorte qu'une fois activé, un flux d'aérosol est libéré à travers la sortie d'aérosol (4a) dans une direction vers ou au moins partiellement vers la face arrière du compartiment inférieur.

11. Armoire à casiers (1) selon l'une quelconque des revendications précédentes, dans laquelle la cheminée commune (7) est couplée à chacune des premières parois latérales de la pluralité de compartiments, et dans laquelle pour chacun des compartiments, ladite ouverture d'évacuation de gaz correspond à une ouverture de paroi à travers ladite première paroi latérale donnant accès à la cheminée commune.

12. Armoire à casiers (1) selon l'une quelconque des revendications précédentes, dans laquelle ladite pluralité de compartiments est empilée le long d'un axe vertical (Z), de préférence ladite cheminée commune (7) s'étend parallèlement à l'axe vertical (Z) à partir d'une face inférieure jusqu'à une face supérieure de la cheminée commune.

13. Armoire à casiers (1) selon la revendication 12, dans laquelle ladite chambre de distribution d'aérosol (3) s'étend parallèlement audit axe vertical (Z) depuis une extrémité inférieure jusqu'à une extrémité supérieure de la chambre de distribution d'aérosol (3), et dans laquelle une première section transversale (S1) de la chambre de distribution d'aérosol (3), avec un plan perpendiculaire audit axe vertical (Z) mesurée au niveau de ladite extrémité inférieure de la chambre de distribution d'aérosol (3), est plus petite qu'une seconde section transversale (S2) de la chambre de distribution d'aérosol (3) avec un plan perpendiculaire à l'axe vertical (Z) mesurée au niveau d'un emplacement du générateur d'aérosol, de préférence la section transversale de la chambre de distribution d'aérosol, avec un plan perpendiculaire à l'axe vertical (Z), augmente lorsque l'on se déplace le long de l'axe vertical (Z) depuis l'extrémité inférieure de chambre de distribution d'aérosol vers l'emplacement du premier générateur d'aérosol (4).

14. Armoire à casiers selon l'une quelconque des revendications précédentes, comprenant en outre une unité de commande principale (15) couplée à l'unité de commande d'aérosol (6), et dans laquelle l'unité de commande principale (15) est configurée pour envoyer un message d'alarme (60) à un service d'incendie suite à un déclenchement d'alarme de fumée par l'au moins un détecteur de fumée (5).
